# FASCICULE DE BREVET EUROPEEN

(11) **EP 1 828 530 B1**
(45) Date de publication et mention de la délivrance du brevet: **16.01.2013**
(21) Numéro de dépôt: 05825876.5
(22) Date de dépôt: 22.12.2005
(51) Int. Cl.: E06B 5/12, E06B 3/66

(54) **VITRE DE FENETRE AVEC UN ELEMENT DE SECURITE**
FENSTERSCHEIBE MIT SICHERHEITSELEMENT
WINDOW PANE WITH SECURITY ELEMENT

(30) Priorité: 23.12.2004 DE 102004062060
(43) Date de publication de la demande: 05.09.2007
(73) Titulaire: Saint-Gobain Glass France S.A., 92400 Courbevoie (FR)
(72) Inventeur: HERMENS, Ulrich, 52078 Aachen (DE)
(74) Mandataire: Aupetit, Muriel J. C.
(86) Numéro de dépôt international: PCT/FR2005/051127
(87) Numéro de publication internationale: WO 2006/070159

(56) Documents cités:
- EP-A- 0 319 695
- EP-A- 0 320 674
- EP-A- 1 035 295
- EP-A- 1 645 714
- DE-U1- 20 204 692
- DE-U1-202004 005 639
- US-A- 5 097 642

## Description

L'invention concerne une fenêtre ou porte comprenant un châssis placé dans une ouverture de bâtiment et une vitre de fenêtre avec un élément de sécurité présentant les caractéristiques du préambule de la revendication 1 ainsi qu'une fenêtre ou une porte équipée d'une telle vitre de fenêtre.

La demande de brevet européen EP 1 645 714 A1 concerne une telle fenêtre ou porte avec un élément de sécurité mené hors de la gorge de bord et fixé dans le châssis de la fenêtre à un connecteur. Ce document relève de l'article 54(3) CBE est n'est pas pris en considération pour l'appréciation de l'activité inventive.

Par la demande de brevet européen EP 0 319 695 A1, on connaît une structure de plaques à assembler à une structure portante pour la formation d'une façade ou d'un toit dans un édifice. La structure de plaques se compose d'une plaque de verre isolante en plusieurs vitres et d'un cadre de support collé au bord arrière des plaques. L'assemblage collé est en l'occurrence fixé par des supports mécaniques disposés en certains points. Les supports individuels sont assemblés fixement au bord extérieur de la structure de plaques pour la formation d'une unité structurelle, sans se prolonger jusqu'à leur face extérieure avant. Ils accrochent par l'arrière, par ailleurs sans contact, une ceinture du cadre de support orientée vers la structure de plaques. L'ancrage des supports à la vitre extérieure peut par exemple être prévu de telle façon que les supports s'engagent dans des entailles dans l'arête périphérique de la vitre extérieure de la plaque de verre isolante. Dans une autre forme de réalisation, les supports s'engagent en certains endroits dans un profilé en U posé dans l'espace creux périphérique de la plaque de verre isolante.

La demande de brevet européen EP 0 320 674 A2 concerne une plaque composée de vitres individuelles avec des organes de maintien et/ou de sécurité. La plaque précitée se compose de deux feuilles de verre collées, au moyen d'une couche de colle transparente, l'une à l'autre et avec des premières parties de bord des organes de maintien et/ou de sécurité pénétrant dans celle-ci. Les organes de maintien et/ou de sécurité se composent pour l'essentiel d'une patte flexible, qui est de préférence formée par un tissu de fils. La deuxième partie de bord de l'organe de maintien et/ou de sécurité sortant de la plaque est fixée à une infrastructure. Lorsque la plaque est assemblée à une autre vitre orientée vers l'infrastructure, à la manière d'un vitrage isolant, la plaque orientée vers l'extérieur est garantie contre la destruction en cas de ruine de cet assemblage.

Par le modèle d'utilité allemand DE 20 2004 005 639 U1, on connaît un composite châssis-verre empêchant l'explosion, qui se compose d'une plaque de verre constituée de plusieurs vitres ainsi que d'un cadre profilé métallique recevant la plaque de verre. Entre les vitres individuelles de la plaque de verre, il est prévu une bande de tissu ou de matière plastique à haute résistance à la déchirure collée de telle façon qu'une patte de la bande de tissu ou de matière plastique sorte de la plaque de verre. Cette patte est menée à angle droit autour de la face frontale de la plaque de verre en direction de la face située à l'opposé de l'effet de l'explosion, et collée ou collée et en plus vissée au cadre profilé métallique.

La demande de brevet européen EP 1 035 295 A2 divulgue une fenêtre exposée à une onde de pression, dans laquelle des éléments de retenue fixés au châssis de la fenêtre sont disposés sur la face de la fenêtre située à l'opposé de l'onde de pression. Les éléments de retenue se trouvent à l'extérieur de la vitre de fenêtre, se composent de câbles d'acier ou de matière plastique et contiennent des dispositifs d'absorption d'énergie, par exemple des éléments à ressorts. Dans le cas où il se produit une onde de pression, la vitre de fenêtre est déformée, elle est expulsée hors du châssis de fenêtre et elle est reprise par les éléments de retenue. De cette manière, le mouvement axial de la vitre de fenêtre vers l'intérieur du local est empêché et l'énergie cinétique est annihilée.

Les solutions connues par l'état de la technique pour fixer des vitres de fenêtres présentent différents inconvénients.

Par exemple, lorsqu'une extrémité des éléments de sécurité est disposée dans la couche intermédiaire de vitres feuilletées composées de plusieurs vitres individuelles assemblées l'une à l'autre sur toute la surface et qu'une autre extrémité est menée latéralement hors de la vitre feuilletée (EP 0 320 674 A2, DE 20 2004 005 639 U1), les vitres feuilletées doivent être fabriquées séparément pour chaque grandeur de fenêtre. Il n'est pas possible de découper les vitres feuilletées dans une grande plaque de dimensions normalisées, comme pour la fabrication des autres fenêtres. De ce fait, les coûts augmentent sensiblement en raison de la fabrication individuelle ou en petites séries.

Cela est également valable pour les solutions dans lesquelles la plaque extérieure d'une vitre de fenêtre est pourvue de dépouilles ou de chanfreins, auxquel(le)s des éléments de maintien peuvent être accrochés. Il s'ajoute ici encore une coûteuse opération d'usinage (du verre). Dans la forme de réalisation selon le document EP 0 319 695 A1, il se manifeste un inconvénient supplémentaire en ce que les plaques de verre isolantes sont assemblées rigidement à l'infrastructure ou à un châssis au moyen de supports. Lorsque cette solution doit être utilisée pour un vitrage atténuant une onde de pression ou de choc, l'infrastructure ou le châssis avec ses éventuelles lattes de fixation du verre et les plaques de verre isolantes doivent être dimensionnés de façon à résister à l'impulsion provoquée par cette charge. Les plaques de verre isolantes ne doivent pas non plus se déformer sous la charge au point d'être expulsées hors de leur châssis. Les dimensions des divers composants doivent dans ce cas être relativement volumineuses et massives.

Les inconvénients précités ne sont certes pas présents dans les éléments de retenue connus par le document EP 1 035 295 A2, parce qu'ils recueillent élastiquement la vitre de fenêtre expulsée hors de son châssis par une onde de choc. Les éléments de retenue composés de fils ou de câbles, visibles de l'extérieur, empêchent cependant la vision libre à travers la fenêtre et influencent de façon défavorable l'aspect de la fenêtre ou même de l'ensemble du bâtiment.

Le problème à la base de l'invention consiste à procurer une vitre de fenêtre améliorée, atténuant l'effet d'une onde de pression ou de choc après une explosion à la manière d'une vitre isolante, qui peut être pourvue d'éléments de retenue et qui peut être fabriquée de manière simple et économique.

Conformément à l'invention, ce problème est résolu par la partie caractérisante de la revendication 1. Les caractéristiques des revendications dépendantes présentent des formes de réalisation avantageuses de ces objets.

La vitre de fenêtre selon l'invention est construite à la manière d'une vitre isolante, elle se compose donc d'au moins deux vitres, qui sont assemblées l'une à l'autre par leurs bords au moyen d'un cadre d'écartement. L'assemblage est usuellement un collage, dans lequel les arêtes extérieures des vitres se prolongent au-delà du cadre d'écartement, de façon à former au bord de la vitre de fenêtre une gorge ouverte vers l'extérieur.

Lorsque la vitre de fenêtre doit assurer également un effet d'isolation, l'espace entre les vitres est obturé de façon étanche au gaz et rempli avec un gaz empêchant l'échange thermique. Ce gaz peut aussi être l'air sous une pression réduite par rapport à la pression atmosphérique. De façon connue en soi, le cadre d'écartement peut être équipé d'un réservoir avec un agent déshydratant, qui est pourvu d'ouvertures vers l'espace intermédiaire de la vitre. On évite ainsi efficacement la formation d'humidité par condensation.

Selon l'invention, un élément de sécurité flexible, allongé, par exemple en forme de câble ou de fil métallique, est disposé dans la gorge de bord de la vitre de fenêtre, au moins une extrémité de l'élément de sécurité étant menée hors de la gorge de bord et sortant ainsi au-delà des dimensions extérieures de la vitre de fenêtre. L'élément de sécurité lui-même se compose d'une matière, qui peut s'opposer à l'impulsion d'une vitre de fenêtre poussée hors de son châssis à cause d'une onde de pression. La vitre de fenêtre est donc capturée à l'aide de son élément de sécurité, qui est fixé à un élément de bâtiment par son extrémité menée hors de la gorge de bord, et est empêchée d'effectuer un mouvement incontrôlé.

Dans une fenêtre fixe, l'élément de sécurité peut être ancré dans le bâtiment lui-même, indépendamment du châssis de la fenêtre.

Du fait que la vitre de fenêtre est fixée au moyen de l'élément de sécurité, indépendamment du châssis qui la contient (et de ses lattes de maintien de verre), le châssis peut être construit de manière sensiblement moins coûteuse et massive, que ce qui est nécessaire pour un dispositif de fenêtre atténuant l'effet d'une onde de pression ou de choc sans élément de sécurité. Les dispositifs de fenêtre mentionnés en dernier lieu doivent notamment être conçus de telle façon que le châssis maintienne la vitre de fenêtre dans tous les cas. De plus, la vitre de fenêtre elle-même doit être réalisée de manière rigide correspondante, pour qu'elle puisse supporter l'impulsion d'une explosion, qu'elle ne se déforme pas et par conséquent qu'elle ne soit pas expulsée hors du châssis. Au contraire, aussi bien le châssis que son garnissage, donc la vitre de fenêtre elle-même, peuvent, avec la vitre de fenêtre selon l'invention, être construits de manière plus simple et plus légère (moins massive), parce que la vitre de fenêtre sera recueillie de façon sûre après avoir été expulsée hors du châssis.

La vitre de fenêtre selon l'invention convient aussi particulièrement bien pour équiper des fenêtres ou des portes existantes. En raison de la variabilité et de la flexibilité des extrémités de l'élément de sécurité menées hors de la vitre de fenêtre, leur fixation à un châssis existant ou dans une ouverture de bâtiment déjà présente est possible sans problème et pour un faible coût.

Etant donné que les éléments de sécurité doivent résister à des forces élevées, on utilise des matières avec une haute résistance à la déchirure. A cet égard, des fils, des câbles, des cordons et des tissus en acier ou en matière plastique à haute résistance se sont avérés intéressants. En raison de la flexibilité desdites formes d'éléments de sécurité, ces derniers peuvent être aisément posés dans la gorge de bord de la vitre de fenêtre et avoir une extrémité menée à l'extérieur.

Dans le cas où il existe un risque que l'élément de sécurité soit arraché hors de la gorge de bord en cas de charge, il peut être fixé au cadre d'écartement, par exemple par soudage ou brasage pour les matières métalliques ou par collage. Lorsque le cadre d'écartement est constitué de lattes préfabriquées et d'éléments d'angle assemblant ces dernières l'une à l'autre, des éléments de sécurité peuvent déjà être prévus par le fabricant du cadre d'écartement. En particulier, les éléments d'angle sont recommandés pour cette variante, parce que ceux-ci sont identiques pour toutes les dimensions de vitres, tandis que les lattes profilées allongées doivent chaque fois être coupées à la longueur adaptée pour la vitre.

Dans la variante avec les éléments de sécurité introduits dans la gorge de bord, les deux extrémités de ceux-ci peuvent aussi être menées hors de la gorge de bord, pour réaliser ainsi un meilleur ancrage à une infrastructure. Un élément de sécurité peut donc être posé dans une gorge de bord de telle façon que la première extrémité de l'élément de sécurité sorte par exemple dans le haut et que l'autre extrémité sorte dans le bas de la vitre de fenêtre. L'élément de sécurité peut cependant aussi entourer la vitre de fenêtre une fois, en formant un "U", ou plusieurs fois, à l'intérieur d'une gorge de bord périphérique. Les extrémités de l'élément de sécurité peuvent alors quitter le contour de la vitre de fenêtre hors de la gorge de bord, par leur prolongement imaginaire dans n'importe quels angles.

Dans une autre forme de réalisation de l'invention, plusieurs éléments de sécurité sont disposés dans une ou plusieurs gorges de bord, la vitre de fenêtre pouvant à nouveau être entourée une seule fois ou plusieurs fois.

Les éléments de sécurité peuvent en outre être posés dans des éléments de guidage disposés dans les gorges de bord. Comme éléments de guidage, on peut envisager par exemple des lattes en forme de U ou de C ou aussi des tubes fermés. Les éléments de guidage peuvent être placés localement à l'intérieur de la gorge de bord ou aussi sur une partie importante de sa longueur. L'ouverture du C ou du U peut en l'occurrence être tournée vers le cadre d'écartement ou aussi dans le sens opposé. Outre leur fonction de guidage, les éléments de guidage peuvent aussi assurer une meilleure répartition de la charge et le délestage du cadre d'écartement.

Dans une forme de réalisation préférée, les éléments de guidage sont de façon connue intégrés dans le cadre d'écartement, du fait que la face de celui-ci orientée à l'opposé de l'espace intermédiaire de la vitre est en forme de C ou de U ou est pourvue d'un espace creux tubulaire. Un tel profilé pour un cadre d'écartement est connu par exemple par la demande de brevet allemand DE 35 16 875 A1. Cette demande de brevet divulgue aussi des profilés d'écartement avec un prolongement sortant de la face de la vitre, qui peut être inséré dans la gorge d'un cadre pour la fixation de la vitre.

Il est usuel que, pour assurer l'étanchéité de l'espace intermédiaire de la vitre, on procède à un colmatage de la gorge de bord périphérique avec une masse de collage et/ou d'étanchéité comme garniture d'étanchéité secondaire, en plus du collage du cadre d'écartement avec les vitres. Ce colmatage peut être employé de façon particulièrement avantageuse pour fixer les éléments de sécurité et/ou de guidage dans la gorge de bord. Particulièrement lorsque les éléments de sécurité ou les éléments de guidage ne sont pas fixés au cadre d'écartement, le colmatage périphérique précité peut servir pour la fixation des éléments de sécurité et/ou de guidage, sans qu'une opération supplémentaire soit nécessaire. Le colmatage obture donc en même temps l'espace intermédiaire de la vitre du vitrage isolant et fixe les éléments de sécurité dans sa gorge de bord.

Les vitres assemblées l'une à l'autre au moyen d'un cadre d'écartement pour former la vitre de fenêtre selon l'invention doivent en règle générale être des vitres renforcées, pour le but prévu, à savoir atténuer l'effet d'une onde de pression ou de choc après une explosion. Comme vitre renforcée, on peut par exemple utiliser une vitre de verre armé. On préfère cependant des vitres feuilletées, qui se composent d'au moins deux vitres individuelles assemblées en surface l'une à l'autre. Les vitres individuelles peuvent être constituées de matière plastique, de verre ou de verre (partiellement) précontraint. Les composites en vitres de verre et vitres ou feuilles de matière plastique résiliente, qui se composent par exemple de polyéthylène téréphtalate ou de polycarbonate, sont particulièrement résistants. Les vitres individuelles peuvent être assemblées l'une à l'autre au moyen d'une couche adhésive thermoplastique, par exemple en polyvinylbutyral ou au moyen d'une couche de résine coulée. Sur demande, on peut également déposer une feuille de retenue des éclats sur la surface orientée vers l'extérieur de la vitre feuilletée.

Dans de nombreux cas, par exemple lorsque la vitre de fenêtre selon l'invention doit résister à des ondes de choc ou de pression particulièrement fortes, il peut être nécessaire de réaliser l'assemblage des vitres avec le cadre d'écartement de façon particulièrement sûre, pour empêcher une rupture du composite et ainsi une séparation d'une des vitres. Une possibilité de garantir cet aspect consiste à agrandir la surface de collage entre le cadre d'écartement et les vitres, donc d'utiliser des profilés d'écartement de plus grande section transversale avec une plus grande surface de collage que ceux que l'on utilise pour les vitrages isolants usuels. Une autre possibilité pour garantir l'assemblage des vitres consiste en l'agencement de profilés supplémentaires en forme d'attaches, qui entourent le bord de la vitre. Ces attaches profilées peuvent par exemple être fabriquées en acier à ressorts et rester sur la vitre de fenêtre et ainsi remplir leur fonction uniquement par leur force élastique. On peut cependant aussi envisager d'autres matières, dans la mesure où elles présentent la résistance nécessaire. Si les attaches profilées n'exercent pas de force élastique, elles doivent être fixées d'une autre manière, par exemple au moyen d'un assemblage collé. Comme colle, on peut employer une masse de colmatage appropriée de l'étanchéité secondaire pour le vitrage composite, ou on utilise une colle supplémentaire. Les attaches profilées précitées en acier à ressorts peuvent bien entendu être en plus collées à la vitre de fenêtre. Les attaches profilées sont placées soit localement sur une ou plusieurs des arêtes de la vitre soit sur toute la longueur d'une ou de plusieurs des arêtes de la vitre.

D'autres détails et avantages de l'objet de l'invention apparaîtront, sans intention de limitation, par les dessins d'exemples de réalisation de vitres de fenêtre avec des éléments de sécurité selon la présente invention et par leur description détaillée qui suit.

Dans ces représentations simplifiées, sans échelle particulière,
La Fig. 1 montre une première forme de réalisation avec un élément de sécurité disposé dans la gorge de bord de la vitre de fenêtre, représentée en coupe;
La Fig. 2 montre une deuxième forme de réalisation avec un élément de sécurité disposé dans la gorge de bord de la vitre de fenêtre et noyé dans une masse d'étanchéité, représentée en coupe;
La Fig. 3 montre une troisième forme de réalisation, représentée en coupe, avec un profilé de cadre d'écartement avec un élément de guidage tubulaire intégré, qui contient l'élément de sécurité;
La Fig. 4 montre une forme de réalisation selon la Fig. 2 avec une attache profilée;
La Fig. 5 représente une forme de réalisation, dans laquelle l'élément de sécurité entoure en U le cadre d'écartement;
La Fig. 6 représente une forme de réalisation, dans laquelle l'élément de sécurité entoure entièrement le cadre d'écartement, et dans laquelle les deux extrémités de l'élément de sécurité sont menées hors de la gorge de bord dans des angles opposés;
La Fig. 7 représente une variante de la vitre de fenêtre, dans laquelle deux éléments de sécurité entourent en U le cadre d'écartement; et
La Fig. 8 montre une cornière d'angle d'une forme de réalisation, dans laquelle l'élément de sécurité est fixé directement à la cornière d'angle du cadre d'écartement.

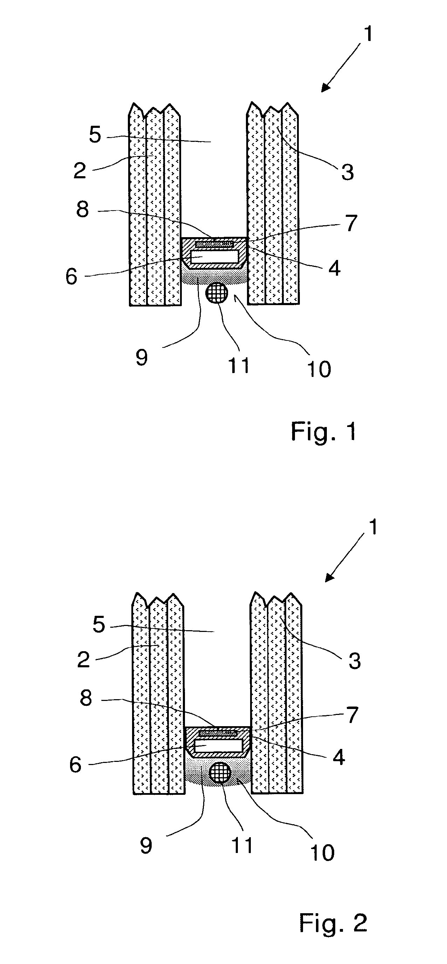

Selon la Fig. 1, une vitre de fenêtre 1 selon l'invention se compose de deux vitres 2, 3 en verre feuilleté, qui sont collées fixement l'une à l'autre avec interposition de profilés 4 d'un cadre d'écartement et enferment entre elles un espace 5. L'espace intermédiaire 5 est rempli d'un gaz qui s'oppose au transport de chaleur. Chacune des vitres 2, 3 est composée de trois vitres de verre précontraint assemblées l'une à l'autre au moyen de feuilles adhésives thermoplastiques en polyvinylbutyral ou en d'autres matériaux adhésifs appropriés et forme ainsi des vitres renforcées connues en soi. Dans le cadre de l'invention, on peut cependant aussi, comme on l'a déjà mentionné, utiliser bien entendu des vitres en matière plastique, par exemple mais pas exclusivement comme vitre centrale dans le composite triple.

Le profilé 4 du cadre d'écartement présente un espace creux 6, dans lequel des languettes d'autres profilés, en particulier des raccords d'angle, peuvent être insérées. De cette manière, on peut fabriquer des pièces profilées et des cadres d'écartement de longueur quelconque. Les raccords d'angle peuvent présenter des angles différents, de telle façon que l'on puisse réaliser des vitres de fenêtre présentant un nombre quelconque d'angles. Les points d'aboutement des profilés doivent naturellement être joints et colmatés de façon sûre les uns par rapport aux autres.

Un autre espace creux 7 dans le profilé 4 est rempli d'un agent hygroscopique. Des ouvertures 8 relient l'espace creux 7 avec l'espace intermédiaire 5 de la vitre, de telle façon que l'agent hygroscopique puisse agir sur le gaz dans l'espace 5. Ainsi, on évite efficacement la condensation de vapeur d'eau sur les faces intérieures des vitres 2 et 3.

En plus de son collage avec les vitres 2 et 3, le profilé 4 et dès lors l'espace intermédiaire 5 de la vitre est colmaté avec une masse d'étanchéité 9 (par exemple du polysulfure). Le profilé 4 est disposé entre les vitres 2 et 3 de façon à former une gorge de bord en retrait 10. Cette gorge 10 reçoit aussi bien la masse d'étanchéité 9 qu'un élément de sécurité en acier 11 en forme de câble.

Dans les représentations qui suivent, des éléments identiques sont désignés par les mêmes repères numériques et ils ne sont pas expliqués de nouveau, dans la mesure où ils ne sont pas modifiés par rapport à la Fig. 1.

L'élément de sécurité 11 dans la Fig. 2 est également un câble d'acier qui, contrairement à la forme de réalisation selon la Fig. 1, a cependant été posé dans la gorge de bord 10 avant d'effectuer le colmatage de l'espace intermédiaire de la vitre au moyen de la masse d'étanchéité 9. D'une part, l'élément de sécurité 11 peut de cette façon être fixé de manière simple, ce qui facilite la manipulation avant le montage de la vitre de fenêtre et le transport. D'autre part, les forces de réaction à transmettre entre l'élément de sécurité 11 et la vitre de fenêtre 1 sont réparties sur une plus grande surface des vitres 2 ou 3 et sur le profilé d'écartement 4. De ce fait, la sécurité et/ou la limite de chargement de la vitre de fenêtre sont accrues.

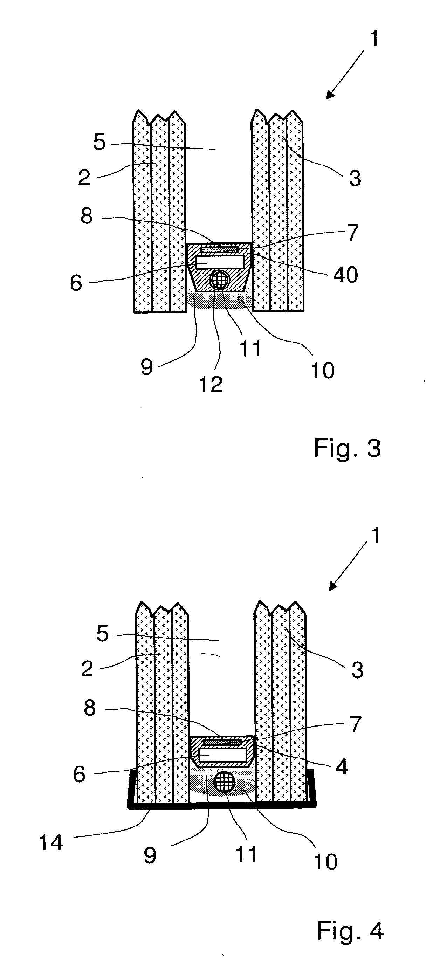

Dans la Fig. 3, on a représenté une forme de réalisation de la vitre de fenêtre 1 selon l'invention, dans laquelle l'élément de sécurité 11 est en plus guidé. A cet effet, un profilé d'écartement 40 possède un évidement tubulaire 12, à travers lequel l'élément de sécurité en forme de câble 11 est placé. Les raccords d'angle pour les profilés 40 peuvent être configurés de telle façon que l'évidement 12 soit libre au point de jonction avec le profilé 40 et que l'élément de sécurité 11 puisse ainsi être mené hors de la gorge de bord 10. Il est cependant également possible de munir l'évidement tubulaire 12, en un endroit quelconque le long du profilé 40, d'une ouverture en direction de la gorge de bord 10, pour mener l'élément de sécurité 11 hors de celle-ci. Dans les deux cas, la position de l'élément de sécurité 11 doit naturellement être fixée et ses extrémités être menées hors de la surface de la vitre, avant d'appliquer la masse d'étanchéité 9.

A la différence de la représentation, l'évidement dans le profilé d'écartement pourrait aussi s'ouvrir sur toute la longueur vers l'arête extérieure de la vitre de fenêtre 1 (en forme de canal ou de rainure). On pourrait également imaginer, au lieu d'un évidement, de prévoir pour l'élément de sécurité un profilé de guidage séparé qui est soit noyé dans l'étanchéité périphérique indépendamment du profilé d'écartement soit attaché fixement à ce dernier.

La coupe représentée dans la Fig. 4 montre une variante de la forme de réalisation selon la Fig. 2, dans laquelle une attache profilée ou plusieurs attaches profilées locales 14 sont disposées le long des arêtes de la vitre de fenêtre. Les attaches profilées 14 entourent les deux vitres 2 et 3 dans leur région de bord. Elles sont constituées d'acier à ressorts et possèdent, après leur montage, une forte précontrainte telle que les vitres 2 et 3 ne peuvent pas se séparer l'une de l'autre, même en cas de rupture éventuelle par surcharge de leur assemblage collé avec les profilés du cadre d'écartement. Elles embrassent aussi l'élément de sécurité 11 et peuvent garantir la position respectivement le maintien de ce dernier dans la gorge de bord.

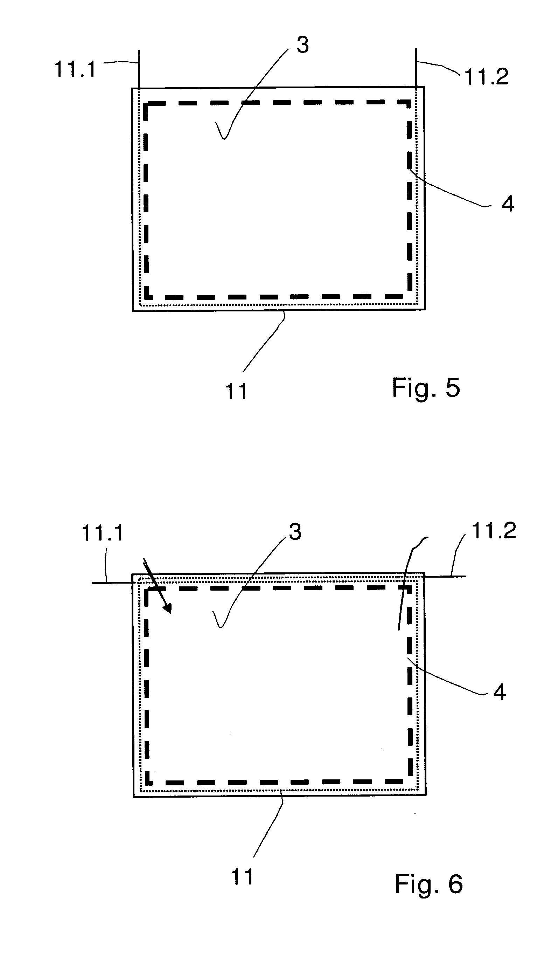

La Fig. 5 montre une vitre de fenêtre 1 selon l'invention vue en élévation, avec la vitre 3 et le cadre d'écartement 4 masqué par cette dernière et représenté schématiquement en traits interrompus. L'élément de sécurité 11 est posé en forme de U à l'intérieur de la gorge de bord 10 tout autour du cadre d'écartement 4, ses deux extrémités 11.1 et 11.2 sont menées vers le haut hors des gorges de bord latérales 10 et peuvent être fixées à un autre élément de construction non représenté.

Dans la forme de réalisation représentée dans la Fig. 6, le cadre d'écartement 4 est entièrement entouré par l'élément de sécurité 11 en forme de câble, les deux extrémités 11.1 et 11.2 de celui-ci étant certes menées hors de la même gorge de bord 10, mais sur des côtés opposés. Dans cette gorge de bord supérieure, l'élément de sécurité est donc posé en double, respectivement avec deux tronçons.

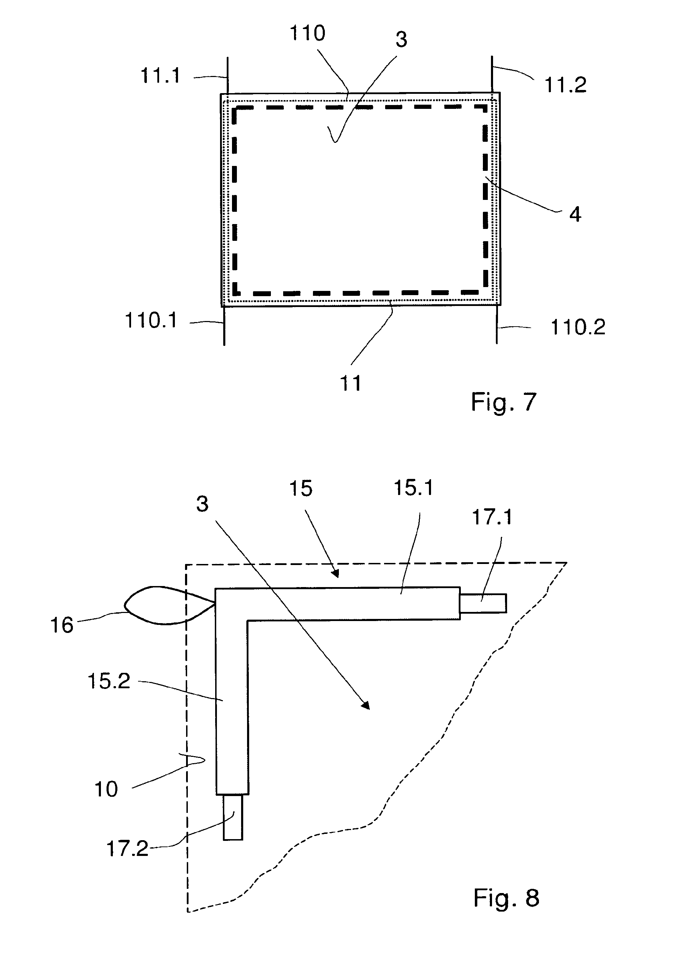

La Fig. 7 montre une variante dans laquelle, en plus de l'élément de sécurité 11, un deuxième élément de sécurité identique 110 est posé en forme de U - comme cela est représenté dans la Fig. 5 - autour du cadre d'écartement. Les ouvertures des boucles en U sont en l'occurrence orientées dans des directions opposées, de sorte que les extrémités 11.1 et 110.1, respectivement 11.2 et 110.2, soient menées hors de la même gorge de bord, mais dans des directions opposées. Dans cette forme de réalisation, la vitre de fenêtre 1 peut être fixée en quatre points à un élément de construction extérieur.

Dans la Fig. 8, on a représenté une cornière d'angle 15 en aluminium, à laquelle un élément de sécurité flexible 16 en boucle est fixé. L'élément de sécurité 16 peut par exemple être un câble d'acier, qui est brasé à la cornière d'angle 15. La cornière d'angle 15 présente des parties profilées 15.1 et 15.2, qui présentent sensiblement la même section transversale que le profilé 4, ainsi que des languettes de jonction 17.1 et 17.2. Celles-ci sont dimensionnées de telle façon qu'elles puissent être introduites en ajustement serré dans l'espace creux 6 du profilé 4. De cette manière, il est par exemple possible de former un cadre fermé avec quatre profilés 4 et quatre cornières d'angle 15.

L'élément de sécurité 16 est dans ce cas également mené hors de la gorge de bord 10 de la vitre de fenêtre. A titre d'illustration, on a tracé en traits interrompus une partie du contour de la vitre 3.

## Revendications

1. Fenêtre ou porte comprenant un châssis apte à être placé dans une ouverture de bâtiment et une vitre de fenêtre pour atténuer l'effet d'une onde de pression ou de choc après une explosion, la vitre de fenêtre (1) étant disposée dans le châssis, dans laquelle la vitre de fenêtre (1) est pourvue d'un élément de sécurité (11, 16) et se compose d'au moins deux vitres (2, 3) disposées à distance l'une de l'autre et enfermant un espace entre elles, qui sont assemblées l'une à l'autre dans leurs régions de bord à l'aide d'un cadre d'écartement (4, 40) avec formation de gorges de bord (10), **caractérisée en ce que**
- l'élément de sécurité (11, 16) est flexible,
- se compose d'un matériau à haute résistance à la déchirure,
- est disposé à l'intérieur d'au moins une gorge de bord (10), et
- au moins une extrémité de l'élément de sécurité (11.1, 11.2, 110.1, 110.2, 16) est menée hors de la gorge de bord (10) et est apte à être ancrée à l'ouverture de bâtiment.

2. Fenêtre ou porte selon la revendication 1, **caractérisée en ce que** l'élément de sécurité (11) est un câble d'acier ou un fil d'acier.

3. Fenêtre ou porte selon la revendication 1, **caractérisée en ce que** l'élément de sécurité (11) est un câble, un cordon ou une bande de tissu en matière plastique à haute résistance.

4. Fenêtre ou porte selon l'une quelconque des revendications 1 à 3, **caractérisée en ce que** l'élément de sécurité (16) est fixé au cadre d'écartement (4, 15).

5. Fenêtre ou porte selon l'une quelconque des revendications précédentes, **caractérisée en ce que** les deux extrémités (11.1, 11.2) de l'élément de sécurité (11) sont menées hors de la gorge de bord (10).

6. Fenêtre ou porte selon l'une quelconque des revendications précédentes, **caractérisée en ce que** l'élément de sécurité (11) entoure entièrement une ou plusieurs fois la vitre de fenêtre (1) à l'intérieur de la gorge de bord (10).

7. Fenêtre ou porte selon la revendication 6, **caractérisée en ce que** les deux extrémités (11.1, 11.2) de l'élément de sécurité (11) sont menées hors de différentes gorges de bord (10) ou de différentes parties de la gorge de bord.

8. Fenêtre ou porte selon l'une quelconque des revendications 5 à 7, **caractérisée en ce que** deux ou plus de deux éléments de sécurité (11, 110) sont disposés à l'intérieur des gorges de bord (10).

9. Fenêtre ou porte selon l'une quelconque des revendications 5 à 8, **caractérisée en ce que** les éléments de sécurité (11) sont disposés dans des éléments de guidage (12) posés à l'intérieur des gorges de bord (10).

10. Fenêtre ou porte selon la revendication 9, **caractérisée en ce que** l'élément de guidage (12) présente une ouverture tubulaire pour recevoir l'élément de sécurité (11).

11. Fenêtre ou porte selon la revendication 9, **caractérisée en ce que** l'élément de guidage présente une section transversale en forme de U ou de C, dans l'ouverture de laquelle l'élément de sécurité est disposé.

12. Fenêtre ou porte selon l'une quelconque des revendications 9 à 11, **caractérisée en ce que** l'élément de guidage (12) est intégré dans le cadre d'écartement (40) ou est assemblé fixement à celui-ci.

13. Fenêtre ou porte selon l'une quelconque des revendications précédentes, **caractérisée en ce que** la gorge de bord (10) est colmatée avec une masse d'étanchéité et/ou de collage (9) et l'élément de sécurité (11) et/ou l'élément de guidage est noyé au moins partiellement dans la masse d'étanchéité et/ou de collage (9).

14. Fenêtre ou porte selon l'une quelconque des revendications précédentes, **caractérisée en ce qu'**au moins une des vitres (2, 3) assemblées l'une à l'autre au moyen d'un cadre d'écartement (4, 40) est une vitre feuilletée.

15. Fenêtre ou porte selon l'une quelconque des revendications précédentes, **caractérisée en ce que** la vitre de fenêtre (1) est pourvue d'au moins un élément d'attache (14) entourant au moins localement au moins un de ses bords.

## Claims

1. A window or door comprising a sash able to be placed in a building opening and a window pane for attenuating the effect of a pressure or shock wave after an explosion, the window pane being placed in the opening sash, in which the window pane (1) is provided with a safety element (11, 16) and consists of at least two panes (2, 3), placed at a distance from one another and enclosing a space between them, which are assembled together in their edge regions with the aid of a spacing frame (4, 40) with formation of edge grooves (10), **characterized in that**
- the safety element (11, 16) is flexible,
- consists of a material with a high tear strength,
- is placed inside at least one edge groove (10),
and
- at least one end of the safety element (11.1, 11.2, 110.1, 110.2, 16) is fed out of the edge groove (10) and is able to be anchored to the building opening.

2. The window or door as claimed in claim 1, **characterized in that** the safety element (11) is a steel cable or a steel wire.

3. The window or door as claimed in claim 1, **characterized in that** the safety element (11) is a cable, a cord or a band of fabric made of high strength plastic.

4. The window or door as claimed in any one of claims 1 to 3, **characterized in that** the safety element (16) is attached to the spacing frame (4, 15).

5. The window or door as claimed in any one of the preceding claims, **characterized in that** the two ends (11.1, 11.2) of the safety element (11) are fed out of the edge groove (10).

6. The window or door as claimed in any one of the preceding claims, **characterized in that** the safety element (11) runs entirely round the window pane (1) one or more times inside the edge groove (10).

7. The window or door as claimed in claim 6, **characterized in that** the two ends (11.1, 11.2) of the safety element (11) are fed out of various edge grooves (10) or various portions of the edge groove.

8. The window or door as claimed in any one of claims 5 to 7, **characterized in that** two or more than two safety elements (11, 110) are placed inside the edge grooves (10).

9. The window or door as claimed in any one of claims 5 to 8, **characterized in that** the safety elements (11) are placed in guide elements (12) placed inside the edge grooves (10).

10. The window or door as claimed in claim 9, **characterized in that** the guide element (12) has a tubular opening to receive the safety element (11).

11. The window or door as claimed in claim 9, **characterized in that** the guide element has a U-shaped or C-shaped cross section, in the opening of which the safety element is placed.

12. The window or door as claimed in any one of claims 9 to 11, **characterized in that** the guide element (12) is incorporated into the spacing frame (40) or is fixedly assembled thereto.

13. The window or door as claimed in any one of the preceding claims, **characterized in that** the edge groove (10) is filled in with a sealing and/or bonding mass (9) and the safety element (11) and/or the guide element is sunk at least partially in the sealing and/or bonding mass (9).

14. The window or door as claimed in any one of the preceding claims, **characterized in that** at least one of the panes (2, 3) assembled together by means of a spacing frame (4, 40) is a laminated pane.

15. The window or door as claimed in any one of the preceding claims, **characterized in that** the window pane (1) is provided with at least one fastening element (14) at least locally running round at least one of its edges.

## Patentansprüche

1. Fenster oder Tür umfassend einen in einer Gebäudeöffnung eingesetzten Rahmen und eine in dem Rahmen angeordnete Fensterscheibe zur Minderung der Wirkung einer Druck- oder Stoßwelle nach einer Explosion, wobei die Fensterscheibe (1) mit einem Sicherungselement (11, 16) versehen ist und aus mindestens zwei im Abstand voneinander angeordneten, einen Raum zwischen sich einschließenden Scheiben (2, 3) besteht, die in ihren Randbereichen mit Hilfe eines Abstandshalter-Rahmens (4, 40) unter Bildung von Randnuten (10) miteinander verbunden sind, **dadurch gekennzeichnet, dass**
- das Sicherungselement (11, 16) flexibel ist,
- aus einem Material hoher Reißfestigkeit besteht,
- innerhalb mindestens einer Randnut (10) angeordnet ist und
- mindestens ein Ende des Sicherungselements (11.1, 11.2, 110.1, 110.2, 16) aus der Randnut (10) herausgeführt ist und an der Gebäudeöffnung verankert ist.

2. Fenster oder Tür nach Anspruch 1, **dadurch gekennzeichnet, dass** das Sicherungselement (11) ein Stahlseil oder ein Stahldraht ist.

3. Fenster oder Tür nach Anspruch 1, **dadurch gekennzeichnet, dass** das Sicherungselement (11) ein Seil, eine Schnur oder ein Gewebeband aus hochfestem Kunststoff ist.

4. Fenster oder Tür nach einem der Ansprüche 1 bis 3, **dadurch gekennzeichnet, dass** das Sicherungselement (16) an dem Abstandshalter-Rahmen (4, 15) befestigt ist.

5. Fenster oder Tür nach einem der vorhergehenden Ansprüche, **dadurch gekennzeichnet, dass** beide Enden (11.1, 11.2) des Sicherungselements (11) aus der Randnut (10) herausgeführt sind.

6. Fenster oder Tür nach einem der vorhergehenden Ansprüche, **dadurch gekennzeichnet, dass** das Sicherungselement (11) die Fensterscheibe (1) innerhalb der Randnut (10) ein- oder mehrfach vollständig umschlingt.

7. Fenster oder Tür nach Anspruch 6, **dadurch gekennzeichnet, dass** die beiden Enden (11.1, 11.2) des Sicherungselements (11) aus unterschiedlichen Randnuten (10) oder Randnut-Abschnitten herausgeführt sind.

8. Fenster oder Tür nach einem der Ansprüche 5 bis 7, **dadurch gekennzeichnet, dass** zwei oder mehr Sicherungselemente (11, 110) innerhalb der Randnuten (10) angeordnet sind.

9. Fenster oder Tür nach einem der Ansprüche 5 bis 8, **dadurch gekennzeichnet, dass** die Sicherungselemente (11) in innerhalb der Randnuten (10) eingelegten Führungselementen (12) angeordnet sind.

10. Fenster oder Tür nach einem der Anspruch 9, **dadurch gekennzeichnet, dass** das Führungselement (12) eine rohrartige Öffnung zur Aufnahme des Sicherungselements (11) aufweist.

11. Fenster oder Tür nach einem der Anspruch 9, **dadurch gekennzeichnet, dass** das Führungselement einen U- oder C-förmigen Querschnitt aufweist, in dessen Öffnung das Sicherungselement angeordnet ist

12. Fenster oder Tür nach einem der Ansprüche 9 bis 11, **dadurch gekennzeichnet, dass** das Führungselement (12) in dem Abstandshalter-Rahmen (40) integriert oder mit diesem fest verbunden ist.

13. Fenster oder Tür nach einem der vorhergehenden Ansprüche, **dadurch gekennzeichnet, dass** die Randnut (10) mit einer Dicht- und/oder Klebemasse (9) versiegelt ist und das Sicherungselement (11) und/oder das Führungselement mindestens teilweise in der Dicht- und/oder Klebemasse (9) eingebettet ist.

14. Fenster oder Tür nach einem der vorhergehenden Ansprüche, **dadurch gekennzeichnet, dass** mindestens eine der mittels eines Abstandshalter-Rahmens (4, 40) miteinander verbundenen Scheiben (2, 3) eine Verbundscheibe ist.

15. Fenster oder Tür nach einem der vorhergehenden Ansprüche, **dadurch gekennzeichnet, dass** die Fensterscheibe (1) mit mindestens einem wenigsten einen ihrer Ränder zumindest stellenweise umgreifenden Klammerelement (14) versehen ist.
